# EUROPÄISCHE PATENTSCHRIFT

(11) **EP 2 440 597 B1**
(45) Veröffentlichungstag und Bekanntmachung des Hinweises auf die Patenterteilung: **16.10.2013**
(21) Anmeldenummer: 10724418.8
(22) Anmeldetag: 31.05.2010
(51) Int. Cl.: C08G 65/40, C08G 65/48, C08G 75/23, C08G 69/40

(54) **SEGMENTIERTE POLYARYLENETHER-BLOCKCOPOLYMERE**
SEGMENTED POLYARYLENE ETHER BLOCK COPOLYMERS
COPOLYMÈRES À BLOCS POLYARYLÈNEÉTHER SEGMENTÉS

(30) Priorität: 08.06.2009 EP 09162164
(43) Veröffentlichungstag der Anmeldung: 18.04.2012
(73) Patentinhaber: BASF SE, 67056 Ludwigshafen (DE)
(72) Erfinder: GIBON, Cecile, 68159 Mannheim (DE); WEBER, Martin, 67487 Maikammer (DE); GAYMANS, Reinoud, J., NL-7548 PX Enschede (NL); STEPHEN, Ranimol, Kerala 682032 (IN)
(86) Internationale Anmeldenummer: PCT/EP2010/057521
(87) Internationale Veröffentlichungsnummer: WO 2010/142548

(56) Entgegenhaltungen:
- EP-A1- 1 253 164
- WO-A1-91/13930
- US-A1- 2006 217 500
- J. KRIJGSMAN, G. J. E. BIEMOND, R. J. GAYMANS: "Segmented Copolymers of Uniform Tetra-amide Units and Poly(Phenylene Oxide) by Direct Coupling" JOURNAL OF APPLIED POLYMER SCIENCE, Bd. 103, 2007, Seiten 512-518, XP002594207

## Beschreibung

Die vorliegende Erfindung betrifft Polyarylenether-Blockcopolymere gemäß der allgemeinen Formel A-K-X-K-A, wobei
- -X- ein Polyarylenether-Segment mit einem zahlenmittleren Molekulargewicht von mindestens 5.000 g/mol ist und
- A- ein Segment der allgemeinen Struktur R²NH-(R¹-NH-CO-Ar-CO-NH)ₙ-R¹-NH- ist, worin R¹ eine lineare oder verzweigte Alkylengruppe mit von 2 bis 12 C-Atomen und Ar eine Arylengruppe mit von 6 bis 18 C-Atomen ist, R² ausgewählt wird aus Aryloyl, Alkyloyl und H und worin n im zahlengewichteten Mittel von 1 bis 3 beträgt, und
- jedes A über eine Kopplungsgruppe K der Struktur -CO-Ar³-CO- an X angebunden ist, worin Ar³ eine aromatische Gruppe mit von 6 bis 18 C-Atomen ist.

Die vorliegende Erfindung betrifft außerdem ein Verfahren zur Herstellung der erfindungsgemäßen Polyarylenether-Blockcopolymere, Polymerzusammensetzungen enthaltend die erfindungsgemäßen Polyarylenether-Blockcopolymere sowie deren Verwendung zur Herstellung von Formkörpern, Filmen, Fasern oder Schäumen.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen. Aus der Literatur ist zudem bekannt, dass funktionalisierte Polyarylenether als Zähmodifier duroplastischer Matrizes verwendet werden können (R.S. Raghava, J. Polym. Sci., Part B: Polym. Phys., 25, (1987) 1017; J.L. Hedrick, I. Yilgor, M. Jurek, J.C. Hedrick, G.L. Wilkes, J.E. McGrath, Polymer, 32 (1991), 2020).

Die Spannungsriss- und Lösungsmittelbeständigkeit von Polyarylenethern ist jedoch für viele Anwendungen nicht zufriedenstellend.

Husken et al., Polymer 45 (2004), 4837-4843 beschreiben segmentierte Blockcopolymere mit einheitlichen Amidsegmenten, welche aus Poly(tetramethylenoxid)- und Tetramid-Segmenten aufgebaut sind.

Die WO 03/070806 beschreibt segmentierte Blockcopolymere, welche aus Amidsegmenten mit mindestens 3 Amidgruppen und Segmenten auf Basis von Polymeren mit hoher Glasübergangstemperatur aufgebaut sind. Die Blockcopolymere weisen eine Multiblock-Struktur auf, in der die genannten Segmente alternierend miteinander verknüpft sind. Die segmentierte Struktur führt zu einer schnellen Kristallisation aus der Schmelze.

Eine solche segmentierte Multiblock-Struktur führt bei vergleichbaren mechanischen Eigenschaften jedoch nicht zu einer für alle Anwendungen ausreichenden Verbesserung der Lösungsmittel- und Spannungsrissbeständigkeit der amorphen Polymere mit hoher Glasübergangstemperatur.

Es war eine Aufgabe der vorliegenden Erfindung ein Material auf Basis von Polyarylenethern bereitzustellen, welches die genannten Nachteile nicht oder in geringerem Ausmaß aufweist.

Insbesondere bestand eine Aufgabe der vorliegenden Erfindung darin, Materialien bereitzustellen, die eine hohe Spannungsrissbeständigkeit bei gleichzeitig hoher Schlagzähigkeit, hoher Glasübergangstemperatur und hoher Festigkeit aufweisen. Die Lösungsmittel- und Spannungsrissbeständigkeit von bekannten Polyarylenethersulfonen sollte verbessert werden, ohne eine signifikante Verschlechterung der mechanischen Eigenschaften zu erhalten.

Die vorgenannten Aufgaben werden gelöst durch die erfindungsgemäßen Polymerzusammensetzungen und durch das erfindungsgemäße Verfahren. Durch Optimierung der Struktur der bekannten Polyarylenether-Blockcopolymere und durch Entwicklung eines neuen Herstellungsprozesses konnten die Eigenschaften des Materials gegenüber dem derzeitigen Stand der Technik verbessert werden.

Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen Polyarylenether-Blockcopolymere weisen eine Struktur gemäß der allgemeinen Formel A-K-X-K-A auf, wobei
- -X- ein Polyarylenether-Segment mit einem zahlenmittleren Molekulargewicht von mindestens 5.000 g/mol ist und
- A- ein Segment der allgemeinen Struktur R²NH-(R¹-NH-CO-Ar-CO-NH)ₙ-R¹-NH- ist, worin R¹ eine lineare oder verzweigte Alkylengruppe mit von 2 bis 12 C-Atomen und Ar eine Arylengruppe mit von 6 bis 18 C-Atomen ist, R² ausgewählt wird aus Aryloyl, Alkyloyl und H und worin n im zahlengewichteten Mittel von 1 bis 3 beträgt, und
- jedes A über eine Kopplungsgruppe K der Struktur -CO-Ar³-CO- an X angebunden ist, worin Ar³ eine Arylengruppe mit von 6 bis 18 C-Atomen ist.

### Polyarylenether-Segment X

Vorzugsweise ist X aufgebaut aus Wiederholungseinheiten der allgemeinen Formel I: 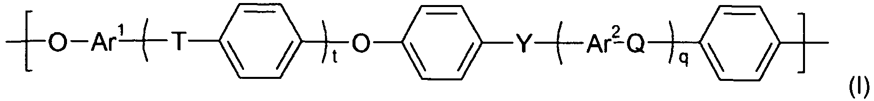 mit folgenden Bedeutungen
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N-, -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
- Ar¹, Ar²:: unabhängig voneinander eine Arylengruppe mit von 6 bis 18 Kohlenstoffatomen.

Der Block X ist beidseitig vorzugsweise über ein Sauerstoffatom mit der Kopplungsgruppe K verknüpft.

Das zahlengewichtete mittlere Molekulargewicht des Blocks X, das mindestens 5.000 g/mol beträgt, kann über einen weiten Bereich variieren. Es bevorzugt, wenn X ein zahlenmittleres Molekulargewicht von mindestens 10.000 g/mol, insbesondere mindestens 15.000 g/mol und besonders bevorzugt mindestens 20.000 g/mol aufweist. Ein Molekulargewicht in diesem Bereich wirkt sich vorteilhaft auf die mechanischen Eigenschaften, insbesondere die Schlagzähigkeit und die Bruchdehnung aus. Das zahlengewichtete mittlere Molekulargewicht wird im Rahmen der vorliegenden Erfindung mittels Gelpermeationschromatographie im Lösungsmittel Tetrahydrofuran mit 0,1% Trifluoroessigsäure gegen engverteiltes Polystyrol als Standard bestimmt.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus chemischer Bindung und den funktionellen Gruppen -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sec.-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, -trimethyl.

Ar¹ und Ar² bedeuten unabhängig voneinander eine C₆-C₁₈-Arylengruppe. Ar¹ wird vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar¹ und Ar² kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar¹ und Ar² in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Wiederholungseinheiten gemäß Formel I sind solche, die mindestens eine der folgenden wiederkehrenden Struktureinheiten la bis Io enthalten:

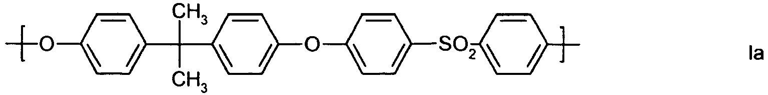

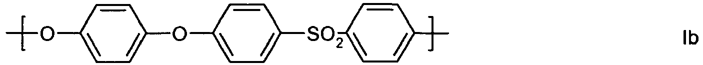

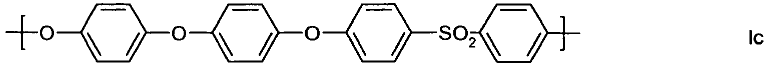

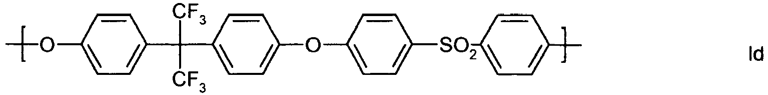

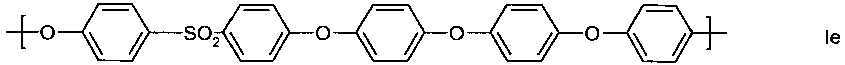

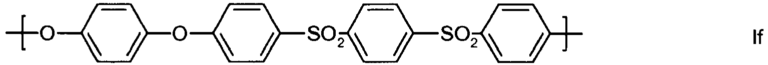

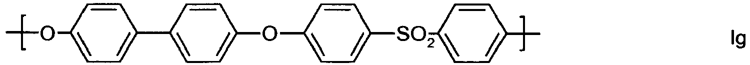

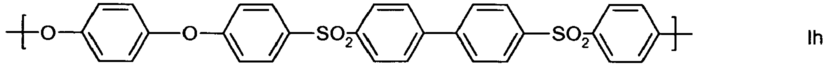

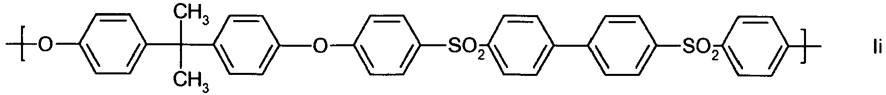

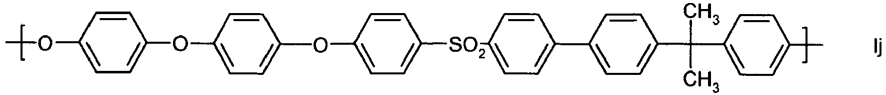

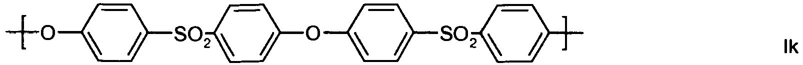

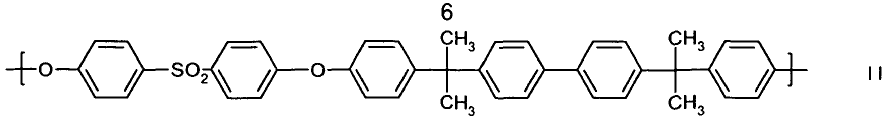

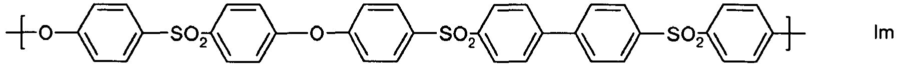

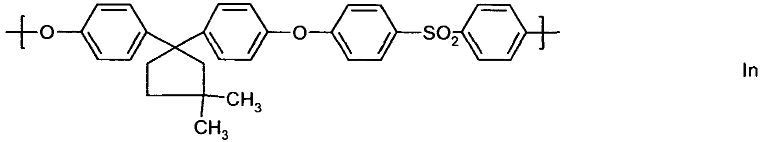

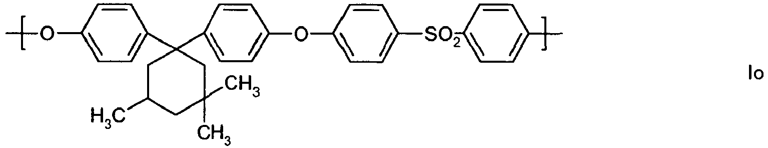

Zusätzlich zu den bevorzugt vorliegenden Bausteinen la bis Io sind auch solche Bausteine bevorzugt, in denen eine oder mehrere 1,4-Dihydroxyphenyl-Einheiten durch Resorcin- oder Dihydroxynaphthalin-Einheiten ersetzt sind.

Als Bausteine der allgemeinen Formel I besonders bevorzugt sind die Bausteine la, Ig und Ik. Es ist außerdem besonders bevorzugt, wenn die Polyarylenether im Wesentlichen aus einer Sorte Bausteine der allgemeinen Formel I, insbesondere aus einem Baustein ausgewählt aus la, Ig und Ik aufgebaut sind. Polyarylenethersulfone auf Basis der Bausteine la, Ig bzw. Ik werden im Rahmen der vorliegenden Erfindung als Polysulfon (PSU), Polyphenylensulfon (PPSU) bzw. Polyethersulfon (PESU) bezeichnet.

In einer besonders bevorzugten Ausführungsform ist Ar¹ = 1,4-Phenylen, t = 1, q = 0, T = -C(CH₃)₂- und Y = SO₂. Diese Struktur entspricht Polysulfon (PSU).

### Segment A

Gemäß der vorliegenden Erfindung ist A- ein Segment der allgemeinen Struktur R²NH-(R¹-NH-CO-Ar-CO-NH)ₙ-R¹-NH-, worin
- R¹ eine lineare oder verzweigte Alkylengruppe mit von 2 bis 12 C-Atomen ist und
- Ar eine Arylengruppe mit von 6 bis 18 C-Atomen ist,
- R² ausgewählt wird aus Aryloyl, Alkyloyl und H,
- worin n im zahlengewichteten Mittel von 1 bis 3 beträgt und
- wobei jedes A über eine Kopplungsgruppe K der Struktur -CO-Ar³-CO- an X angebunden ist, worin Ar³ eine Arylengruppe mit 6 bis 18, vorzugsweise 6 bis 12 C-Atomen ist.

R¹ ist vorzugsweise eine lineare oder verzweigte aliphatische Kohlenwasserstoffgruppe, d. h. Alkylengruppe, mit von 2 bis 8 Kohlenstoffatomen, insbesondere eine lineare aliphatische Kohlenwasserstoffgruppe mit von 2 bis 8 Kohlenstoffatomen.

R¹ bedeutet besonders bevorzugt, Ethylen, n-Propylen, iso-Propylen, n-Butylen, Dimethylpropylen, n-Pentylen, n-Hexylen (Hexamethylen), n-Octylen oder n-Dodecylen. Ganz besonders bevorzugt ist R¹ Hexamethylen.

Ar bedeutet ebenso wie Ar³ vorzugsweise 1,4-Phenylen, 1,2-Phenylen, 1,3-Phenylen, 1,4-Naphthylen, 1,8-Naphthylen, 2,2'-, 2,4'-, oder 4,4'-Biphenylen. Vorzugsweise ist Ar = 1,4-Phenylen.

Besonders bevorzugt ist R¹ eine lineare aliphatische Kohlenwasserstoffgruppe (Alkylengruppe) mit von 2 bis 8 Kohlenstoffatomen und Ar = 1,4-Phenlyen.

Vorzugsweise beträgt n im Zahlenmittel von 1 bis 2, insbesondere im Wesentlichen 1. Besonders bevorzugt ist n = 1. Dies führt zu einer geringen Polydispersität der entsprechenden Segmente und zu einer besonders hohen Kristallinität sowie zu vorteilhaften Eigenschaften.

In einer ersten bevorzugten Ausführungsform ist R² Aryloyl oder Alkyloyl. Der Begriff Aryloyl kennzeichnet eine aromatische Kohlenwasserstoffgruppe, welche mit einer Carbonylgruppe verknüpft ist (Aryl-CO-). Der Begriff Alkyloyl kennzeichnet eine aliphatische Kohlenwasserstoffgruppe, welche mit einer Carbonylgruppe verknüpft ist (Alkyl-CO-). Selbstverständlich kommen auch araliphatische Gruppen in Betracht, welche mit einer Carbonylgruppe verknüpft sind (Araliphat-CO-).

Die Verwendung der vorgenannten Gruppen R² (Aryloyl oder Alkyloyl) weist den Vorteil auf, dass die so vorliegende zusätzliche Amidgruppe zu einer Verbesserung der thermischen Stabilität und zu einer Erhöhung des Schmelzpunkts der zugrundeliegenden Segmente A führt, was in einer höheren Temperaturdifferenz im Verhältnis zu Tg des Segmentes X resultiert. Hierdurch erhält die Schmelze vorteilhafterweise mehr Zeit zu kristallisieren. Besonders bevorzugt ist R² = Aryloyl.

Bevorzugte Aryloylgruppen weisen die Struktur Ar-CO- auf, wobei Ar die oben definierte Bedeutung hat. Die Verwendung derselben Gruppe Ar in der Aryloylgruppe und im "Inneren" des Segmentes A verbessert aufgrund der strukturellen Ähnlichkeit der Struktur die Neigung zur Kristallinität und führt zu einer besonders guten Spannungsrissund Lösungsmittelbeständigkeit. Die Aryloylgruppe kann im Prinzip auf einer aromatische Gruppe mit von 6 bis 18 Kohlenstoffatomen, insbesondere 6 bis 12 Kohlenstoffatome, basieren.

Bevorzugte Beispiele für Aryloyl sind Benzyloyl, Naphthyloyl und Phenyl-Propionyl.

Bevorzugte Alkyloylgruppen weisen die Struktur R⁴-CO- auf. R⁴ kann im Prinzip eine lineare oder verzweigte Alkylgruppe mit von 1 bis 20 Kohlenstoffatomen sein, insbesondere 2 bis 10, vorzugsweise 3 bis 8 Kohlenstoffatome.

Bevorzugte Beispiele für Alkyloyl sind Butyryl, Valeryl, Hexanoyl, Heptanoyl, Octanoyl, Nonanoyl, Decanoyl und Cyclohexancarbonyl.

Vorzugsweise ist R² im Rahmen dieser ersten Ausführungsform Benzoyl.

In einer zweiten bevorzugten Ausführungsform ist R² = H. Der Vorteil dieser Ausführungsform liegt in der einfachen Herstellbarkeit bei gleichzeitig zufriedenstellender thermischer Stabilität. Die erste vorgenannte Ausführungsform ist jedoch gegenüber der zweiten Ausführungsform (R² = H) aus den oben genannten Gründen bevorzugt.

Vorgenannte Segmente A sind dem Fachmann an sich bekannt und werden in Krijgsman et al., Polymer 44 (2003) auf den Seiten 7043 bis 7053 beschrieben, deren Inhalt hiermit in vollem Umfang einbezogen sei. Die dort beschriebenen Segmente, welche mit xTx bezeichnet werden, können vorteilhaft im Rahmen der vorliegenden Erfindung verwendet werden. "x" kennzeichnet dabei eine Alkylengruppe mit x Methylengruppen (d.h. 6 = Hexamethylen usw.).

Erfindungsgemäß weist die Kopplungsgruppe die Struktur K -CO-Ar³-CO- auf, wobei Ar³ eine Arylengruppe mit von 6 bis 18 C-Atomen ist. Ar³ kann die unter Ar ausgeführten Bedeutungen haben.

Vorzugsweise ist Ar = Ar³. Hierdurch weisen die jeweiligen Bausteine eine erhöhte strukturelle Ähnlichkeit auf. Dies führt zu einer höheren Kristallinität und zu einer verbesserten Lösungsmittel- und Spannungsrissbeständigkeit bei gleichbleibenden mechanischen Eigenschaften.

Die Kopplungsgruppe K ist vorzugsweise -CO-1,4-Phenylen-CO-. Hierdurch wird eine hohe Ausprägung an Bildung von Kristallkeimen begünstigt, was zu einer besonders hohen Spannungsrissbeständigkeit führt.

Verfahren zur Herstellung der erfindungsgemäßen Polyarylenether-Blockcopolymere

Erfindungsgemäß umfasst das Verfahren zur Herstellung der erfindungsgemäßen Polyarylenether-Blockcopolymere folgende Schritte:
(a) Bereitstellung mindestens eines Polyarylenethers X*, der aufgebaut ist aus Wiederholungseinheiten wie im Rahmen der erfindungsgemäßen Polyarylenether-Blockcopolymere definiert und im Wesentlichen Phenolat- oder phenolische Endgruppen aufweist, und eines Amidsegmentes A* der Struktur NH₂-(R¹-NHCO-Ar-CO-NH)ₙ-R¹-NH₂ mit den Bedeutungen wie im Rahmen der erfindungsgemäßen Polyarylenether-Blockcopolymere definiert und anschließend
(b) Kopplung von X* und A* im stöchiometrischen Verhältnis von 1 mol X* zu 2 mol A* mit einem Kopplungsmittel K*, welches das Strukturelement -CO-Ar-CO- aufweist, wobei Ar die Bedeutung wie im Rahmen der erfindungsgemäßen Polyarylenether-Blockcopolymere definiert hat.

Es ist für den Fachmann offensichtlich, dass die Notation X*, A* und K* den Strukturen X, A und K der erfindungsgemäßen Polyarylenether-Blockcopolymere entsprechen, welche zusätzlich geeignete Endgruppen aufweisen, welche im erfindungsgemäßen Verfahren reaktiv sind. Derartige Endgruppen sind dem Fachmann bekannt. Es sei angemerkt, dass sich A* von A auch dadurch unterscheidet, dass R² = H. Letztere Gruppe kann durch anschließende Umsetzung in R² = Aryloyl oder Alkyloyl umgewandelt werden, siehe unten.

Unter Phenolat-Endgruppen werden im Rahmen der vorliegenden Erfindung negativ geladene Sauerstoffatome in Form einer Endgruppe verstanden, die an einen aromatischen Kern gebunden sind. Diese Endgruppen leiten sich von den phenolischen Endgruppen durch Entfernung eines Protons ab. Unter phenolischer Endgruppe wird im Rahmen der vorliegenden Erfindung eine Hydroxygruppe verstanden, die an einen aromatischen Kern gebunden ist.

Unter dem Begriff "im Wesentlichen Phenolat- oder phenolische Endgruppen" ist zu verstehen, dass mindestens 80 % (d.h. mindestens 80 von 100) der vorhandenen Endgruppen entweder Phenolat- oder phenolische Endgruppen sind.

Vorzugsweise sind mindestens 85 % der Endgruppen des Polyarylenethers X* Phenolat-Endgruppen oder phenolische Endgruppen, insbesondere mindestens 90 %, besonders bevorzugt mindestens 95 %, ganz besonders bevorzugt mindestens 98 %.

Die Bestimmung des Anteils der Phenolat- bzw. der phenolischen Endgruppen erfolgt vorzugsweise durch Bestimmung als OH-Endgruppen mittels potentiometrischer Titration und Bestimmung der organisch gebundenen Halogen-Endgruppen mittels Atomspektroskopie und anschließender Berechnung der jeweiligen Zahlenanteile in %. Entsprechende Methoden sind dem Fachmann bekannt. Alternativ kann die Bestimmung der Anteile der jeweiligen Endgruppen mittels ¹³C-Kernspinresonanzspektroskopie erfolgen.

Es ist dem Fachmann bekannt, dass Phenolat-Endgruppen bei der Bildung von Amidgruppen eine höhere Reaktivität aufweisen. Der Fachmann wandelt somit vorzugsweise phenolische Endgruppen, sofern vorhanden, durch Zugabe einer Base vorab oder in situ teilweise oder ganz in Phenolat-Endgruppen um.

Bevorzugte Segmente X* weisen somit Wiederholungseinheiten wie im Rahmen von X definiert auf, wobei die Endgruppen Phenolat- oder phenolische Endgruppen sind. Derartige Polyarylenether werden im Folgenden vereinfacht als OH-terminierte Polyarylenether bezeichnet.

Die Herstellung OH-terminierter Polyarylenether ist dem Fachmann hinlänglich bekannt. Die Herstellung OH-terminierter Polyarylenether erfolgt im Allgemeinen durch nucleophile Polykondensation von aromatischen Dihalogenverbindungen und aromatischen Dihydroxyverbindungen in einem dipolar aprotischen Lösungsmittel (vorzugsweise N-Methylpyrrolidon) und Kaliumcarbonat als Base. Dabei wird die aromatische Dihydroxyverbindung in einem molaren Überschuss von üblicherweise 1,05 bis 1,08 mol im Verhältnis zu 1 mol der aromatischen Dihalogenverbindung eingesetzt.

Die OH-terminierten Polyarylenether können in einer ersten bevorzugten Ausführungsform unmittelbar als Reaktionsprodukte gelöst im Lösungsmittel (L) ohne weitere Aufarbeitung verwendet werden. Diese Variante weist den Vorteil auf, dass sie verfahrenstechnisch besonders einfach durchzuführen ist.

In einer zweiten bevorzugten Ausführungsform werden die OH-terminierten Polyarylenether durch Aufarbeitung in Reinform gewonnen. Eine solche Aufarbeitung ist vorzugsweise die Filtration und anschließend Fällung in Wasser oder einem Gemisch aus Wasser und N-Methylpyrrolidon.

Vorzugsweise beträgt der Anteil der phenolischen Endgruppen der verwendeten Polyarylenether mindestens 0,1 Gew.-% OH berechnet als Gewichtsmenge OH bezogen auf die Gesamtmenge der Polymerzusammensetzung, insbesondere mindestens 0,12 Gew.-%, besonders bevorzugt mindestens 0,15 Gew.-%.

Die Bestimmung der phenolischen Endgruppen als Gewichtsmenge OH in Bezug auf die Gesamtmenge des Polyarylenethers erfolgt mittels potentiometrischer Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch.

Die Herstellung der Amid-Segmente A* erfolgt vorzugsweise durch Reaktion zwischen einer entsprechenden Disäure und einem entsprechenden Diamin, wobei das Diamin im Überschuss von vorzugsweise 3 zu 1 bis 10 zu 1, insbesondere 6 zu 1 bis 8 zu 1 eingesetzt wird. Das Produkt wird anschließend ausgefällt, gewaschen und umkristallisiert. Hierdurch kann ein besonders einheitliches Produkt erhalten werden.

Die Herstellung der Amid-Segmente A* erfolgt dabei vorzugsweise als Segmente der allgemeinen Formel H₂N-R¹-NH-CO-Ar-CO-NH-R¹-NH₂, wobei R¹ und Ar die oben definierten Bedeutungen haben.

Die Herstellung geeigneter Amid-Segmente A* wird in Krijgsman et al., Polymer 44 (2003) auf den Seiten 7043 bis 7053 beschrieben.

Erfindungsgemäß erfolgt gemäß Verfahrensschritt (b) eine Kopplung von X* und A* im stöchiometrischen Verhältnis von1 mol X* zu 2 mol A* mit einem Kopplungsmittel K*, welches das Strukturelement -CO-Ar³-CO-, wie im Rahmen der erfindungsgemäßen Polyarylenether-Blockcopolymeren definiert, aufweist.

Die Kopplung erfolgt dabei durch chemische Reaktion von X*, A* und K*. In einer ersten Ausführungsform wird in einem ersten Schritt X* mit K* umgesetzt. Hierdurch lassen sich reaktive Polyarylenether erhalten, deren Endgruppen modifiziert wurden. Vorzugsweise erfolgt die Umsetzung in Gegenwart einer Base, vorzugsweise eines aliphatischen Amins, insbesondere N-Ethyldiisopropylamin. In einem zweiten Schritt erfolgt anschließend die Umsetzung des erhaltenen Produkts mit A*.

Es ist erfindungswesentlich, die Kopplung von X* und A* im stöchiometrischen Verhältnis von 1 mol X* zu 2 mol A* durchzuführen. Hierdurch bilden sich die erfindungsgemäßen Triblockcopolymere. Das stöchiometrische Verhältnis von1 mol X* zu 2 mol A* wird vorzugsweise erreicht, indem pro Mol X* von 1,9 bis 2,15 mol A* eingesetzt werden. Besonders bevorzugt ist ein Verhältnis von 1,95 bis 2,05 mol A* pro mol X*.

In einer zweiten bevorzugten Ausführungsform wird in einem ersten Schritt A* mit K* umgesetzt. Hierdurch werden modifizierte Amidsegmente erhalten. In einem zweiten Schritt erfolgt anschließend die Umsetzung mit X*.

Als Endgruppen des Kopplungsmittels K* mit dem Strukturelement -CO-Ar³-CO- kommen solche Endgruppen in Betracht, welche gegenüber Amin- und Hydroxygruppen reaktiv sind.

Geeignete reaktive Endgruppen sind insbesondere Anhydride und Säurehalogenide, insbesondere Säurechloride. Vorzugsweise ist das Kopplungsmittel K* ein Säuredichlorid. Besonders bevorzugt ist das Kopplungsmittel K Terephthalsäuredichlorid.

In einer bevorzugten Ausführungsform erfolgt nach Schritt (b) gemäß Schritt (c) die Umsetzung des erhaltenen Reaktionsproduktes mit einer Verbindung der Struktur Ar-CO-Cl, wobei Ar die oben definierte Bedeutung hat.

Vorzugsweise erfolgt gemäß Schritt (d) des erfindungsgemäßen Verfahrens anschließend die Gewinnung des Polyarylenether-Blockcopolymers als Feststoff.

Grundsätzlich kommen verschiedene Verfahren zur Gewinnung als Feststoff in Betracht. Bevorzugt ist jedoch eine Gewinnung des Polyarylenether-Blockcopolymers durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich das Polyarylenether-Blockcopolymer nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) bzw. Schritt (c) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (b) bzw. Schritt (c) in fein verteilter Form, insbesondere in Tropfenform.

Sofern als schlechtes Lösungsmittel (L') eine Mischung aus dem Lösungsmittel (L), insbesondere N-Methyl-2-pyrollidon, und einem Nicht-Lösungsmittel, insbesondere Wasser, verwendet wird, dann ist ein Mischungsverhältnis Lösungsmittel:Nichtlösungsmittel von 1:2 bis 1:100, insbesondere 1:3 bis 1:50 zu bevorzugen.

Die Ausfällung erfolgt besonders effizient, wenn der Gehalt des Polyarylenether-Blockcopolymers im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Die Reinigung des Polyarylenether-Blockcopolymers erfolgt nach dem Fachmann bekannten Methoden, beispielsweise Waschen mit geeigneten Lösungsmitteln, in denen die erfindungsgemäßen Polyarylenether-Blockcopolymere bevorzugt größtenteils unlöslich sind.

Ein weiterer Erfindungsgegenstand sind Polymerzusammensetzungen enthaltend ein erfindungsgemäßes Polyarylenether-Blockcopolymer. Die erfindungsgemäßen Polyarylenether-Blockcopolymere eignen sich insbesondere zur Herstellung von Formkörpern, Filmen, Fasern oder Schäumen.

Durch die erfindungsgemäße Struktur wird eine besonders vorteilhafte Kombination aus günstigen mechanischen Eigenschaften und verbesserter Lösungsmittelbeständigkeit erreicht. Die Triblockcopolymerstruktur erlaubt es, den kristallinen Anteil im Material für ein gegebenes Molekulargewicht des Segmentes X zu maximieren. Nebenbei sind hohe Molekulargewichte des Segmentes X von Vorteil, um gute mechanische Eigenschaften zu erzeugen.

Die folgenden Beispiele erläutern die Erfindung näher, ohne sie einzuschränken.

### Beispiele

Die Viskositätszahl der Polyarylenether wurde in 1 %-iger Lösung von N-Methylpyrrolidon bei 25°C gemäß DIN EN ISO 1628-1 bestimmt.

Mechanische Prüfungen: Schlagzähigkeitsversuche wurden nach ISO179-2/1eU (ungekerbt) und ISO179-2/1eA (gekerbt) durchgeführt (sogen. Charpy-Schlagzähigkeit). Zugversuche wurden nach ISO 527-2 durchgeführt. Im Rahmen des Zugversuches nach ISO 527-2 wurde die Bruchdehnung und die Streckgrenze sowie das Elastizitätsmodul E bestimmt.

Lösungsmittelbeständigkeit: Es erfolgte die visuelle Beobachtung nach 24h dauernder Lagerung des jeweiligen Materials in Form von Spritzgussstäben (Schulterstäbe mit mittlerem Teil 80*10*4 mm³) bei einer Temperatur von 80°C im Lösungsmittel FAM B.

### Synthese OH-PSU-OH mit Mn=20.000 g/mol (Produkt PSU₂₀):

Es wurde ein Polyarylether durch nucleophile aromatische Polykondensation von 574,16 g Dichlordiphenylsulfon, 466,77 g Bisphenol A, unter Einwirkung von 297,15 g Kaliumcarbonat in 1053 ml NMP erhalten. Diese Mischung wurde 6 Stunden unter Stickstoffatmosphäre bei 190°C gehalten. Danach wurde der Ansatz durch Zugabe von 1947 ml NMP verdünnt, die festen Bestandteile wurden durch Filtration abgetrennt und das Polymere durch Fällung in NMP/Wasser 1/4 isoliert. Nach sorgfältigem Waschen mit Wasser wurde das Produkt unter Vakuum bei 120°C für 12 h getrocknet. Die Viskositätszahl des Produkts lag bei 40 ml/g.

### Synthese OH-PSU-OH mit Mn=10.000 g/mol (Produkt PSU₁₀):

Es wurde ein Polyarylether durch nucleophile aromatische Polykondensation von 574,16 g Dichlordiphenylsulfon, 477,22 g Bisphenol A, unter Einwirkung von 297,15 g Kaliumcarbonat in 1053 ml NMP erhalten. Diese Mischung wurde 6 Stunden unter Stickstoffatmosphäre bei 190°C gehalten. Danach wurde der Ansatz durch Zugabe von 1947 ml NMP verdünnt, die festen Bestandteile werden durch Filtration abgetrennt und das Polymere durch Fällung in NMP/Wasser 1/4 isoliert. Nach sorgfältigem Waschen mit Wasser wurde das Produkt unter Vakuum bei 120°C für 12 h getrocknet. Die Viskositätszahl des Produkts lag bei 27 ml/g.

### Synthese eines Amid-Segments 6T6:

In einem 4l-Doppelmantelreaktor mit Ankerrührer, Rückflusskühler und N2-Inertisierung wurden 696g (6,0mol) 1,6-Diaminohexan vorgelegt und auf 80°C aufgeheizt. 145,5g (0,75mol) Dimethylterephthalat wurden zu dem Diamin zudosiert und die Mischung wird 4 Stunden gerührt. Anschließend wurde das Reaktionsmedium gekühlt und in 1,5 l Toluol verdünnt. Das Produkt fiel aus und wurde durch Filtration isoliert. Es wurde mit heißem Toluol (80°C) gewaschen und abfiltriert. Dieser Vorgang wurde 8 mal durchgeführt. Anschließend wurde der Prozess zweimal bei Raumtemperatur mit Diethylether wiederholt. Der Filterkuchen wurde bei 50°C über Nacht unter Vakuum getrocknet.

### Synthese eines segmentierten Triblockcopolymers 6T6T-PSU-T6T6aus dem PSU₂₀ (Beispiel 1):

500 g des PSU₂₀ wurden im Reaktor bei 30°C in Dichlormethan gelöst. Zu der Lösung wurden 19,4 g des N-ethyldiisopropylamins dosiert. Nach 5min wurde das in 250 ml Dichlormethan gelöste Terephthalsäuredichlorid (10,2 g) dosiert. Nach 15min wurden die in 800 ml NMP bei 120°C gelösten 18,1 g des 6T6 zu dieser Reaktionsmischung dosiert. Anschließend wurde 1 Stunde bei 90°C gerührt. Danach wurde das Dichlormethan abdestilliert und gleichzeitig mit NMP verdünnt. Die Aufarbeitung des Produkts erfolgte durch Fällung des Copolymers in NMP/Wasser 1/4. Das Produkt wurde sorgfältig mit Wasser gewaschen und unter Vakuum bei 150°C über 2 Tage getrocknet. Die Viskositätszahl des Produkts lag bei 84 ml/g.

Schließlich wurde das Produkt in einem PTW16 Doppelschneckenextruder bei 330°C (Gehäusetemperatur) granuliert und in einer Spritzgussmaschine zu Zugstäben abgespritzt.

### Synthese eines segmentierten Triblockcopolymers 6T6T-PSU-T6T6 aus dem PSU₁₀ (Beispiel 2):

500 g des PSU₁₀ wurden im Reaktor bei 30°C in Dichlormethan gelöst. Zu der Lösung wurden 38,7 g des N-ethyldiisopropylamins dosiert. Nach 5min wurde das in 250 ml Dichlormethan gelöste Terephthalsäuredichlorid (20,3 g) dosiert. Nach 15 min wurden die in 800 ml NMP bei 120°C gelösten 36,2 g des 6T6 zu dieser Reaktionsmischung dosiert. Anschließend wurde 1 Stunde bei 90°C gerührt. Danach wurde das Dichlormethan abdestilliert und gleichzeitig mit NMP verdünnt. Die Aufarbeitung des Produkts erfolgte durch Fällung des Copolymers in NMP/Wasser 1/4. Das Produkt wurde sorgfältig mit Wasser gewaschen und unter Vakuum bei 150°C über 2 Tage getrocknet. Die Viskositätszahl des Produkts lag bei 68 ml/g.

Schließlich wurde das Produkt in einem PTW16 Doppelschneckenextruder bei 330°C (Gehäusetemperatur) granuliert und in einer Spritzgussmaschine zu Zugstäben abgespritzt.

### Synthese eines segmentierten Multiblockcopolymers (PSU-T6T6)ₙ aus dem PSU₁₀ (Vergleichsbeispiel 3):

500 g des PSU₁₀ wurden im Reaktor bei 30°C in Dichlormethan gelöst. Zu der Lösung wurden 38,7 g des N-ethyldiisopropylamins dosiert. Nach 5min wurde das in 250 ml Dichlormethan gelöste Terephthalsäuredichlorid (20,3 g) dosiert. Nach 15min wurden die in 800 ml NMP bei 120°C gelösten 18,1 g des 6T6 zu dieser Reaktionsmischung dosiert. Anschließend wurde 1 Stunde bei 90°C gerührt. Danach wurde das Dichlormethan abdestilliert und gleichzeitig mit NMP verdünnt. Die Aufarbeitung des Produkts erfolgte durch Fällung des Copolymers in NMP/Wasser 1/4. Das Produkt wurde sorgfältig mit Wasser gewaschen und unter Vakuum bei 150°C über 2 Tage getrocknet.

Schließlich wurde das Produkt in einem PTW16 Doppelschneckenextruder bei 330°C (Gehäusetemperatur) granuliert und in einer Spritzgussmaschine zu Zugstäben abgespritzt.

### Synthese eines segmentierten Triblockcopolymers B6T6T-PSU-T6T6B (Beispiel 4):

Es wurde ein Polyarylenether durch nucleophile aromatische Polykondensation von 389,3 g Dichlordiphenylsulfon, 316,5 g Bisphenol A, unter Einwirkung von 201,5 g Kaliumcarbonat in 714 ml NMP erhalten. Diese Mischung wurde 6 Stunden unter Stickstoffatmosphäre bei 190°C gehalten. Danach wurde der Ansatz durch Zugabe von 1036 ml NMP verdünnt.

Zu der PSU-Lösung in NMP wurde 23,26 g des N-Ethyldiisopropylamins dosiert. Nach 5min wurde das in 250 ml Dichlormethan gelöste Terephthalsäuredichlorid (12,18 g) dosiert. Nach 15 min wurden die in 500 ml NMP bei 120°C gelösten 21,75 g des 6T6 zu dieser Reaktionsmischung dosiert. Anschließend wurde 1 Stunde bei 80°C gerührt. Das Reaktionsmedium wurde anschließend auf 30°C abgekühlt. 8,43 g Benzoylchlorid wurden zudosiert. Nach 30 min wurde die Lösung mit 500 ml NMP verdünnt.

Die Aufarbeitung des Produkts erfolgte durch Filtration der festen Bestandteile und Fällung des Copolymers in NMP/Wasser 1/4. Das Produkt wurde sorgfältig mit Wasser gewaschen und unter Vakuum bei 150°C über 2 Tage getrocknet. Die Viskositätszahl des Produkts lag bei 51 ml/g.

Schließlich wurde das Produkt in einem ZSK18 Doppelschneckenextruder bei 325°C (Gehäusetemperatur) granuliert dann mit 40 % Glass Faser in einem ZSK30 Doppelschneckenextruder bei 330°C (Gehäusetemperatur) compoundiert und in einer Spritzgussmaschine zu Zugstäben abgespritzt.

Als Vergleichsversuche wurden die entsprechenden Werte folgender Materialien ermittelt:
Vergleichsbeispiel 5: Polysulfon des Typs PSU mit einem zahlengewichteten mittleren Molekulargewicht von 18.500 g/mol (Bestimmt mittels Gelpermeationschromatographie) und mit 40 Gew.-% Glasfasern.
Vergleichsbeispiel 6: Polysulfon des Typs PSU mit einem zahlengewichteten mittleren Molekulargewicht von 18.500 g/mol (Bestimmt mittels Gelpermeationschromatographie).

Die Materialien der oben genannten Beispiele wurden einem Spannungsrissbeständigkeitstest unterzogen, indem Zugstäbe (Schulterstäbe mit mittlerem Teil 80*10*4mm³) 24h bei 80°C in FAM B gelagert wurden. Anschließend wurden die Proben visuell begutachtet. Ein Kriterium war dabei die Formbeständigkeit des Zugstabes unter den Bedingungen des Tests, da sie die Lösungsmittelbeständigkeit semiquantitativ wiedergibt.

| Beispiel | Spannungsrissbeständigkeit (24h, 80°C, FAM B) ³⁾ | Charpy-Schlagzähigkeit | | Zugversuch ISO 527-2 | | |
|---|---|---|---|---|---|---|
| | | aₖ (kJ/m²) | aₙ (kJ/m²) | E (MPa) | σ_{y} (MPa) ²⁾ | ε_{B} (%) ²⁾ |
| 1 | ++ | 5,7 | 346 | 2726 | 79 | 34 |
| 2 | + | 3,5 | 86 | 2714 | 81 ¹⁾ | 3-10 |
| V3 | - | 4 | 94 | 2700 | 70 ¹⁾ | 3-10 |
| 4 | + | 3,2 | 20,2 | 12460 | 128 | 1,3 |
| V5 | - | 8 | 40 | 13500 | 146 | >1,5 |
| V6 | - | 6 | 400 | 2600 | 65 | 20-50 |

| | | | | | | |
|---|---|---|---|---|---|---|
| ¹⁾ Die Hälfte der Stäbe brach vor dem yield point (spröder Bruch). ²⁾ Wobei σ_{y} und ε_{B} die Streckgrenze bzw. die Bruchdehnung darstellen. ³⁾ Spannungsrissbeständigkeit: ++ = leicht gequollen, aber formstabil; + = gequollen, aber im Wesentlichen formstabil; - = stark gequollen und nicht formstabil | | | | | | |

## Patentansprüche

1. Polyarylenether-Blockcopolymer der Struktur A-K-X-K-A, wobei
- -X- ein Polyarylenether-Segment mit einem zahlenmittleren Molekulargewicht von mindestens 5.000 g/mol ist und
- A- ein Segment der allgemeinen Struktur R²NH-(R¹-NH-CO-Ar-CO-NH)ₙ-R¹-NH- ist, worin R¹ eine lineare oder verzweigte Alkylengruppe mit von 2 bis 12 C-Atomen und Ar eine Arylengruppe mit von 6 bis 18 C-Atomen ist, R² ausgewählt wird aus Aryloyl, Alkyloyl und H und worin n im zahlengewichteten Mittel von 1 bis 3 beträgt, und
- wobei jedes A über eine Kopplungsgruppe K der Struktur -CO-Ar³-CO- an X angebunden ist, worin Ar³ eine aromatische Gruppe mit von 6 bis 18 C-Atomen ist.

2. Polyarylenether-Blockcopolymer nach Anspruch 1, wobei X aufgebaut ist aus Wiederholungseinheiten der allgemeinen Formel I 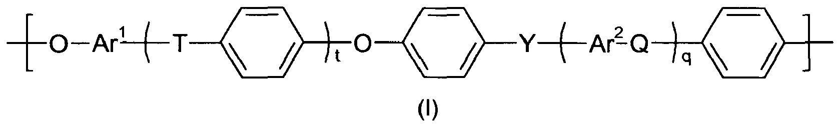 mit folgenden Bedeutungen
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N-, -CR^{a}R^{b}-, wobei R^{a} und R^{b} unabhängig voneinander jeweils für ein Wasserstoff-atom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
Ar¹, Ar²: unabhängig voneinander eine Arylengruppe mit von 6 bis 18 Kohlenstoffatomen.

3. Polyarylenether-Blockcopolymer nach Anspruch 1 oder 2, wobei X ein Polyarylenethersulfon auf Basis von Bisphenol-A ist.

4. Polyarylenether-Blockcopolymer nach den Ansprüchen 1 bis 3, wobei X ein Polysulfon (PSU) ist.

5. Polyarylenether-Blockcopolymer nach den Ansprüchen 1 bis 4, wobei X ein zahlenmittleres Molekulargewicht von mindestens 15.000 g/mol aufweist.

6. Polyarylenether-Blockcopolymer nach den Ansprüchen 1 bis 5, wobei R¹ Hexamethylen ist.

7. Polyarylenether-Blockcopolymer nach den Ansprüchen 1 bis 6, wobei Ar und Ar³ 1,4-Phenylen sind.

8. Polyarylenether-Blockcopolymer nach den Ansprüchen 1 bis 7, wobei n im zahlengewichteten Mittel von 1 bis 2 beträgt.

9. Polyarylenether-Blockcopolymer nach den Ansprüchen 1 bis 8, wobei n = 1 ist.

10. Polyarylenether-Blockcopolymer nach den Ansprüchen 1 bis 9, wobei die Kopplungsgruppe K -CO-1,4-Phenylen-CO- ist.

11. Polyarylenether-Blockcopolymer nach den Ansprüchen 1 bis 10, wobei R² Benzoyl oder H ist.

12. Verfahren zur Herstellung der Polyarylenether-Blockcopolymere gemäß den Ansprüchen 1 bis 11 umfassend folgende Schritte:
(a) Bereitstellung mindestens eines Polyarylenethers X*, der aufgebaut ist aus Wiederholungseinheiten wie in den Ansprüchen 1 bis 11 definiert und im Wesentlichen Phenolat-Endgruppen oder phenolische Endgruppen aufweist, und eines Amidsegmentes A* der Struktur NH₂-(R¹-NHCO-Ar-CO-NH)ₙ-R¹-NH₂ mit den Bedeutungen wie in den Ansprüchen 1 bis 11 definiert und anschließend
(b) Kopplung von X* und A* im stöchiometrischen Verhältnis von 1 mol X* zu 2 mol A* mit einem Kopplungsmittel K*, welches das Strukturelement K wie in den Ansprüchen 1 bis 11 definiert aufweist.

13. Verfahren nach Anspruch 12, wobei das Kopplungsmittel K* ein Säuredichlorid ist.

14. Verfahren nach Anspruch 12 oder 13, wobei das Kopplungsmittel K* Terephthalsäuredichlorid ist.

15. Verfahren nach den Ansprüchen 12 bis 14, wobei mindestens 80 % der Endgruppen des Polyarylenethers X* Phenolat-Endgruppen oder phenolische Endgruppen sind.

16. Verfahren nach den Ansprüchen 12 bis 15, wobei in Anschluss an Schritt (b) gemäß Schritt (c) die Umsetzung des erhaltenen Reaktionsproduktes mit einer Verbindung der Struktur Ar-CO-Cl erfolgt, worin Ar die in den Ansprüchen 1 bis 11 definierte Bedeutung hat.

17. Polymerzusammensetzungen enthaltend ein Polyarylenether-Blockcopolymer gemäß den Ansprüchen 1 bis 11.

18. Verwendung der Polyarylenether-Blockcopolymere gemäß den Ansprüchen 1 bis 11 oder der Polymerzusammensetzungen gemäß Anspruch 17 zur Herstellung von Formkörpern, Filmen, Fasern oder Schäumen.

## Claims

1. Polyarylene ether block copolymer of the structure A-K-X-K-A, where
- -X- is a polyarylene ether segment with number-average molar mass of at least 5000 g/mol, and
- A- is a segment of the general structure R²NH-(R¹-NH-CO-Ar-CO-NH)ₙ-R¹-NH-, in which R¹ is a linear or branched alkylene group having from 2 to 12 carbon atoms and Ar is an arylene group having from 6 to 18 carbon atoms, and R² is selected from aryloyl, alkyloyl, and H, and in which the number average of n is from 1 to 3, and
- where there is a coupling group K of the structure -CO-Ar³-CO- linking each A to X, in which Ar³ is an aromatic group having from 6 to 18 carbon atoms.

2. The polyarylene ether block copolymer according to claim 1, where X is composed of repeat units of the general formula I 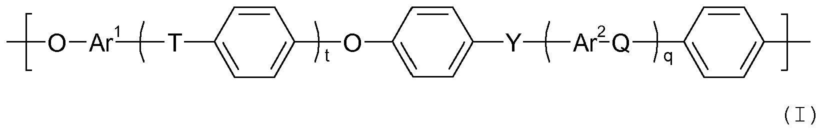 where the definitions are as follows:
t and q: independently of one another, 0, 1, 2, or 3,
Q, T, and Y: each, independently of one another, a chemical bond or group selected from -O-, -S-, -SO₂-, S=O, C=O, -N=N-, -CR^{a}R^{b}-, where each of R^{a} and R^{b}, independently of the other, is a hydrogen atom or a C₁-C₁₂-alkyl, C₁-C₁₂-alkoxy, or C₆-C₁₈-aryl group, where at least one of Q, T, and Y is not -O-, and at least one of Q, T and Y is -SO₂-, and
Ar¹ and Ar²: independently of one another, an arylene group having from 6 to 18 carbon atoms.

3. The polyarylene ether block copolymer according to claim 1 or 2, where X is a polyarylene ether sulfone based on bisphenol A.

4. The polyarylene ether block copolymer according to claims 1 to 3, where X is a polysulfone (PSU).

5. The polyarylene ether block copolymer according to claims 1 to 4, where X has a number-average molar mass of at least 15 000 g/mol.

6. The polyarylene ether block copolymer according to claims 1 to 5, where R¹ is hexamethylene.

7. The polyarylene ether block copolymer according to claims 1 to 6, where Ar and Ar³ are 1,4-phenylene.

8. The polyarylene ether block copolymer according to claims 1 to 7, where the number average of n is from 1 to 2.

9. The polyarylene ether block copolymer according to claims 1 to 8, where n = 1.

10. The polyarylene ether block copolymer according to claims 1 to 9, where the coupling group K is -CO-1,4-phenylene-CO-.

11. The polyarylene ether block copolymer according to claims 1 to 10, where R² is benzoyl or H.

12. A process for the production of the polyarylene ether block copolymers according to claims 1 to 11, comprising the following steps:
(a) provision of at least one polyarylene ether X*, which is composed of repeat units as defined in claims 1 to 11 and in essence has phenolate end groups or phenolic end groups, and of an amide segment A* of the structure NH₂-(R¹-NHCO-Ar-CO-NH)ₙ-R¹-NH₂, where the definitions are as in claims 1 to 11, and then
(b) coupling of X* and A* in a stoichiometric ratio of 1 mol of X* to 2 mols of A* with a coupling agent K* which has the structural element K as defined in claims 1 to 11.

13. The process according to claim 12, where the coupling agent K* is an acyl dichloride.

14. The process according to claim 12 or 13, where the coupling agent K* is terephthaloyl dichloride.

15. The process according to claims 12 to 14, where at least 80% of the end groups of the polyarylene ether X* are phenolate end groups or phenolic end groups.

16. The process according to claims 12 to 15, where, following step (b), in step (c) the reaction of the resultant reaction product with a compound of the structure Ar-CO-Cl takes place, in which Ar is defined as in claims 1 to 11.

17. A polymer composition comprising a polyarylene ether block copolymer according to claims 1 to 11.

18. The use of the polyarylene ether block copolymers according to claims 1 to 11 or of the polymer compositions according to claim 17 for the production of moldings, of films, of fibers, or of foams.

## Revendications

1. Copolymère à blocs de polyarylène-éther de structure A-K-X-K-A, où
- -X- représente un segment polyarylène-éther présentant un poids moléculaire numérique moyen d'au moins 5000 g/mole et
- A- représente un segment de structure générale R²NH-(R¹-NH-CO-Ar-CO-NH)ₙ-R¹-NH-, où R¹ représente un groupe alkylène linéaire ou ramifié comprenant 2 à 12 atomes de carbone et Ar représente un groupe arylène de 6 à 18 atomes de carbone, R² est choisi parmi aryloyle, alkyloyle et H et n vaut en moyenne pondérée numériquement 1 à 3, et
- chaque A étant lié à X via un groupe de couplage K de structure -CO-Ar³-CO-, Ar³ étant un groupe aromatique de 6 à 18 atomes de carbone.

2. Copolymère à blocs de polyarylène-éther selon la revendication 1, X étant formé d'unités récurrentes de formule générale I 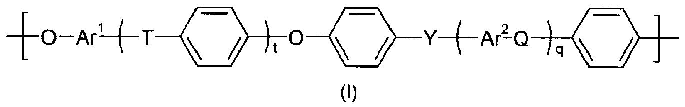 présentant les significations suivantes :
t, q : indépendamment l'un de l'autre, 0, 1, 2 ou 3,
Q, T, Y : indépendamment les uns des autres, à chaque fois une liaison ou un groupe chimique, choisi parmi -O-, -S-, -SO₂-, S=O, C=O, -N=N-, -CR^{a}R^{b}-, R^{a} et R^{b} représentant indépendamment l'un de l'autre à chaque fois un atome d'hydrogène ou un groupe C₁-C₁₂-alkyle, C₁-C₁₂-alcoxy ou C₆-C₁₈-aryle, au moins un parmi Q, T et Y étant différent de -O- et au moins un parmi Q, T et Y représentant -SO₂- et
Ar¹, Ar² : indépendamment l'un de l'autre, un groupe arylène comprenant 6 à 18 atomes de carbone.

3. Copolymère à blocs de polyarylène-éther selon la revendication 1 ou 2, X étant une polyarylène-éthersulfone à base de bisphénol-A.

4. Copolymère à blocs de polyarylène-éther selon les revendications 1 à 3, X étant une polysulfone (PSU).

5. Copolymère à blocs de polyarylène-éther selon les revendications 1 à 4, X présentant un poids moléculaire numérique moyen d'au moins 15 000 g/mole.

6. Copolymère à blocs de polyarylène-éther selon les revendications 1 à 5, R¹ représentant hexaméthylène.

7. Copolymère à blocs de polyarylène-éther selon les revendications 1 à 6, Ar et Ar³ représentant 1,4-phénylène.

8. Copolymère à blocs de polyarylène-éther selon les revendications 1 à 7, n valant en moyenne pondérée numériquement 1 à 2.

9. Copolymère à blocs de polyarylène-éther selon les revendications 1 à 8, n = 1.

10. Copolymère à blocs de polyarylène-éther selon les revendications 1 à 9, le groupe de couplage K étant -CO-1,4-phénylène-CO-.

11. Copolymère à blocs de polyarylène-éther selon les revendications 1 à 10, R² représentant benzoyle ou H.

12. Procédé pour la préparation des copolymères à blocs de polyarylène-éther selon les revendications 1 à 11, comprenant les étapes suivantes :
(a) préparation d'au moins un polyarylène-éther X*, qui est formé d'unités récurrentes telles que définies dans les revendications 1 à 11 et présentant essentiellement des groupes terminaux phénolate ou phénoliques, et d'un segment amide A* de structure NH₂-(R¹-NHCO-Ar-CO-NH)ₙ-R¹-NH₂ présentant les significations telles que définies dans les revendications 1 à 11, puis
(b) couplage de X* et A* dans un rapport stoechiométrique de 1 mole de X* à 2 moles de A* à l'aide d'un agent de couplage K*, qui présente l'élément de structure K comme défini dans les revendications 1 à 11.

13. Procédé selon la revendication 12, l'agent de couplage K* étant un dichlorure d'acide.

14. Procédé selon la revendication 12 ou 13, l'agent de couplage K* étant le dichlorure de l'acide téréphtalique.

15. Procédé selon les revendications 12 à 14, au moins 80% des groupes terminaux du polyarylène-éther X* étant des groupes terminaux phénolate ou phénoliques.

16. Procédé selon les revendications 12 à 15, la transformation du produit de réaction obtenu consécutivement à l'étape (b) ayant lieu selon l'étape (c) avec un composé de structure Ar-CO-Cl, Ar ayant la signification définie dans les revendications 1 à 11.

17. Compositions polymères contenant un copolymère à blocs de polyarylène-éther selon les revendications 1 à 11.

18. Utilisation de copolymères à blocs de polyarylène-éther selon les revendications 1 à 11 ou des compositions polymères selon la revendication 17 pour la préparation de corps moulés, de films, de fibres ou de mousses.
